Europäisches Patentamt

European Patent Office

Office européen des brevets

(11) Veröffentlichungsnummer: **0 270 735 B1**

(12) **EUROPÄISCHE PATENTSCHRIFT**

(45) Veröffentlichungstag der Patentschrift: **29.04.92**

(21) Anmeldenummer: **87109037.9**

(22) Anmeldetag: **24.06.87**

(51) Int. Cl.⁵: **B60P 3/20**

(54) **Kühlaufbau für Lastfahrzeuge.**

(30) Priorität: **12.11.86 DE 8630333 U**

(43) Veröffentlichungstag der Anmeldung:
**15.06.88 Patentblatt 88/24**

(45) Bekanntmachung des Hinweises auf die
Patenterteilung:
**29.04.92 Patentblatt 92/18**

(84) Benannte Vertragsstaaten:
**DE**

(56) Entgegenhaltungen:
**WO-A-85/02821        DE-A- 2 650 698**
**DE-U- 7 512 997        FR-A- 1 281 478**
**US-A- 3 335 653        US-A- 3 711 148**

(73) Patentinhaber: **F. X. Kögel GmbH & Co.**
**Daimlerstrasse 18**
**W-7900 Ulm(DE)**

(72) Erfinder: **Strobel, Georg**
**Biberacher Strasse 110**
**W-7900 Ulm-Wiblingen(DE)**
Erfinder: **Häge, Walter**
**Fünf-Bäume-Weg 238**
**W-7900 Ulm(DE)**

(74) Vertreter: **Kohlmann, Karl Friedrich, Dipl.-Ing.**
**et al**
**Hoffmann, Eitle & Partner Arabellastrasse 4**
**(Sternhaus)**
**W-8000 München 81(DE)**

## Beschreibung

Die Erfindung betrifft einen Kühlaufbau für Lastfahrzeuge mit einer im Boden und in den Seitenwänden einschl. der Türen zum Innenraum hin offenen, der Luftführung dienenden Profilierung, die im Bereich aller vertikalen Seitenwände aus Nuten oder Rinnen besteht, die in einen unteren, im wesentlichen waagerecht verlaufenden und rinnenartig ausgebildeten Luftführungskanal einmünden und sich von dort aus in Richtung auf die obere Innenraumbegrenzung erstrecken.

Ein solcher Kühlaufbau ist beispielsweise durch die US-A-33 35 653 bekannt.

Die oben genannte, gattungsbildende US-Patentschrift zeigt und beschreibt einen Kühlaufbau für Lastfahrzeuge, bei dem sowohl im Boden als auch in den Seitenwänden einschließlich der Türen Nuten oder Rinnen zur Luftführung vorgesehen sind. Dabei enden die Nuten in den Seitenwänden im oberen Bereich dieser Seitenwände, ohne untereinander verbunden zu sein und sie enden im unteren Bereich der Seitenwände in einem Luftführungskanal, der unterhalb der Oberfläche des Bodens liegt und aus einer im Boden eingearbeiteten Nut oder Rinne besteht.

Diese bekannte Ausführungsform hat den Nachteil, daß bei einer dichten Beladung des Laderaums, beispielsweise mit eng an den Seitenwänden anliegendem Ladegut (Kisten, Kartons) eine seitliche Kühlluft-Führung dadurch behindert wird, daß die Kühlluft aus den oberen Enden der Nuten nicht austreten und damit nicht wirksam werden kann. Ein weiterer Nachteil besteht darin, daß beim Beladen des Innenraums des Kühlaufbaus mit Hilfe von Flurfördergeräten die Nuten an den Seitenwänden beschädigt werden können. Dies geschieht zum Beispiel dadurch, daß beim Einschieben von Paletten diese an den unteren Abschnitten der Nuten entlangschrammen und dort Beschädigungen hervorrufen.

Ferner ist durch die DE-A 2 650 698 ein Kühlaufbau beschrieben, bei dem der Boden, die Seitenwände und die Decke des Kühlraums mir Profilierungen versehen sind, die in das Innere des Warenraumes weisen. Diese Profilierungen dienen jedoch lediglich dazu, ein in den Kühlraum eingespritztes Kühlmittel im Bereich der Wandungen zu verteilen. Bei einer dichten Beladung des Innenraums ist die Verteilung der durch das verdampfende Kühlmittel erzeugten Kühlluft im Bereich der Wandungen jedoch nicht mehr gewährleistet, da die durch die Profilierung gebildeten Kanäle durch das Ladegut verstellt werden können. Ferner besteht die Gefahr, daß die Profilierung durch den Gebrauch von Flurfördergeräten im bodenseitigen Bereich beschädigt wird, was ebenfalls die Verteilung der Kühlluft negativ beeinflußt.

Der Erfindung liegt hiernach die Aufgabe zugrunde, einen Kühlaufbau der eingangs geschilderten Art so weiterzubilden, daß selbst bei dichter Beladung eine ausreichende Luftzirkulation und damit eine bestmögliche Kühlung gewährleistet ist und daß die Gefahr von Beschädigungen an der für die Zirkulation notwendigen Profilierung verringert wird.

Diese Aufgabe wird gemäß der Erfindung dadurch gelöst, daß die Luftführungskanäle 12, 14 im Abstand nach oben von der Oberseite des Bodens 5 des Innenraumes angeordnet sind, daß die Breite der Luftführungskanäle 12, 14 größer ist als diejenige der sich von ihm aus in Richtung auf die obere Innenraumbegrenzung erstreckenden Nuten oder Rinnen und dadurch, daß an jeder Seitenwand bevorzugt ein weiterer, im wesentlichen waagerechter Luftführungskanal 11, 13 vorgesehen ist, in den die Rinnen oder Nuten der betreffenden Seitenwand einmünden.

Der Erfindung liegt der Gedanke zugrunde, Vorkehrungen zu treffen, die einerseits eine gleichmäßige Zufuhr der Kühlluft zu den Nuten oder Rinnen der vertikal verlaufenden Profilierung und andererseits eine gleichmäßige Abführung der Kühlluft im Bereich der unteren Enden der Nuten oder Rinnen, unabhängig vom Beladungszustand sicherstellt. Zu diesem Zweck werden erfindungsgemäß jeweils an den Enden der Nuten oder Rinnen der vertikal verlaufenden Profilierung die im wesentlichen waagrecht verlaufenden, oberen und unteren rinnenartigen Luftführungskanäle vorgesehen, die einerseits für eine gleichmäßige Beschickung mit Kühlluft (obere Luftführungskanäle) sorgen und andererseits ein gleichmäßiges Abziehen der Kühlluft im Bereich der unteren Enden der Nuten oder Rinnen (untere Luftführungskanäle) ermöglichen.

Durch diese Zwangsführung der Kühlluft wird darüber hinaus im Bereich der Nuten oder Rinnen eine gewisse Ejektorwirkung erzeugt, die sich auf die an die Nuten oder Rinnen angrenzenden Bereiche auswirkt und zu einem gleichmäßigen, stetig abwärtsströmenden Kühlluftvorhang im Bereich der Innenflächen der Seitenwände führt.

Durch die erfindungsgemäße Anordnung der mit der Profilierung verbundenen Luftführungskanäle wird bei einem Kühlaufbau der eingangs beschriebenen Art erstmalig eine genau definierte, von möglichen Restspalten vollkommen unabhängige Kühlluftführung gewährleistet, die auch durch ein extrem dichtes Beladen nicht beeinflußt werden kann. Das Ladegut wird deshalb selbst bei ungünstiger dichter Beladung optimal umspült. Aufgrund dieser verbesserten Umspülung kann die Vorlauftemperatur des Kühlaggregates erhöht werden, wodurch ein geringerer Energiebedarf für das Kühlaggregat resultiert. Auch kann das Kühlaggregat öfter im Teillastbetrieb arbeiten, wodurch eine Geräuschreduzierung, eine weitere Energieeinsparung sowie eine geringere Umweltbelastung erreicht werden.

Wegen der gesetzlich auf maximal 2,5 m plus zulässiger Toleranz beschränkten Außenbreite des Kühlaufbaues einerseits und der in der Praxis geforderten möglichst großen lichten Breite des Innenraums andererseits, werden die Seitenwände von Kühlaufbaiten hinsichtlich der Wandstärke stets dünner gewählt, als die Wandstärke der Decke und des Bodens. Dies bedeutet, daß die Seitenwände gegenüber der Decke und dem Boden zwangsläufig einen reduzierten K-Wert aufweisen, weshalb gerade in diesem Bereich eine gute und gleichmäßige Kühlung erforderlich ist. Auch diesem Umstand trägt die erfindungsgemäße Luftführung Rechnung.

Eine besonders günstige Luftführung wird mit rinnenartigen Luftführungskanälen erzielt, die einen trapezförmigen Querschnitt aufweisen. Eine derartige Ausgestaltung ist auch in fertigungstechnischer Hinsicht von Vorteil.

Aufgrund des Merkmales, daß der untere Luftführungskanal im Abstand vom Boden angeordnet ist, wird die Gefahr von Beschädigungen der für die Zirkulierung der Kühlluft notwendigen Profilierung erheblich verringert, da erfahrungsgemäß derartige Beschädigungen gerade durch Flurfördergeräte im unteren, unmittelbar an den Boden anschließenden Bereich der Seitenwände erfolgen. Eine besonders vorteilhafte Weiterbildung in Bezug auf die Vermeidung von Beschädigungen beim Beladen wird jedoch dadurch erreicht, daß jede Seitenwand zwischen der Oberseite des Bodens und dem unteren Rand des unteren Luftführungskanales Schrammflächen aufweist, die sich über die gesamte Länge des Aufbaues erstrecken und gegenüber den Innenflächen der Seitenwände erhaben sind.

Mit dem Begriff "erhaben" soll ausgesagt werden, daß die Schrammflächen weiter in den Innenraum des Kühlaufbaues hineinragen als die Innenflächen der Seitenwände. Auf diese Weise wird zwar die lichte Innenbreite des Kühlaufbaues im Bereich der Schrammflächen etwas reduziert. Versuche haben jedoch gezeigt, daß bereits eine wenige Millimeter betragende erhabene Ausbildung der Schrammflächen zu einer überraschenden Reduzierung der Beschädigungsgefahr führt.

Grundsätzlich können die Schrammflächen aus Einzelflächen zusammengesetzt sein. Besonders vorteilhafte Ergebnisse werden jedoch dann erreicht, wenn die Schrammflächen eine in vertikaler Richtung durchgehende Fläche bilden, deren Ebene parallel zur Ebene der Innenfläche verläuft.

Bei einem bevorzugten Ausführungsbeispiel ist die Anordnung derart getroffen, daß die Ebene der Schrammflächen gegenüber der Ebene der Innenflächen der Seitenwände einen Abstand aufweist, der etwa der halben Tiefe des angrenzenden unteren Luftführungskanales entspricht.

Um die Strömung der Kühlluft nicht zu behindern, ist es vorteilhaft, daß die Profilierung absatzlos in die oberen und unteren Luftführungskanäle übergeht. Zur Verbesserung der Luftführung trägt darüberhinaus bei, daß die Breite der unteren und oberen Luftführungskanäle größer ist als die Breite der Nuten oder Rinnen der Profilierung.

Vorteilhaft ist es, die Schrammflächen verstärkt auszubilden. Diese Verstärkung kann auf verschiedenste Weise erfolgen. So können die Schrammflächen bzw. deren, Verstärkung aus Metall, wie beispielsweise Aluminium oder nicht rostendem Stahl bestehen. Im Falle einer Ausbildung der Schrammflächen aus Polyester ist es vorteilhaft unter der Deckschicht eine druckfeste Materiallage anzuordnen.

Durch die erhabenen Schrammflächen zwischen der Oberseite des Bodens und dem Unterrand des unteren Luftführungskanales wird die Gefahr von Beschädigungen an den Seitenwänden bereits weitgehend reduziert. Eine noch weitergehende Reduzierung der Beschädigungsgefahr wird jedoch erreicht, wenn im Bereich der Innenflächen etwa auf halber Höhe der Seitenwände horizontal verlaufende Schienen angeordnet werden, deren dem Innenraum zugewandte Flächen zusätzlich als Schrammflächen ausgebildet sind. Diese horizontal verlaufenden Schienen können gleichzeitig als Widerlager für an sich bekannte. einhängbaren Zwischenbodenträger eingesetzt werden.

Die Kühlaggregate sind meist im Bereich der Vorderwand auf der Außenseite des Kühlaufbaues angeordnet. In der Vorderwand sind dann Durchbrüche und Kanäle vorgesehen, durch die einerseits die Kühlluft in den Bereich der Decke des Kühlaufbaues eingespeist wird und andererseits die "verbrauchte" Kühlluft zur Rückkühlung wieder dem Kühlaggregat zugeführt wird. In den meisten Fällen ist dabei zur Bildung eines Kühlluftspaltes im Abstand von der Innenfläche der Vorderwand eine Wandung oder Platte vorgesehen, durch die verhindert wird, daß Ladung zu dicht an die Vorderwand des Kühlaufbaues herangeführt wird. Gemäß einer vorteilhaften Weiterbildung der Erfindung sind die unteren Luftführungskanäle derart ausgestaltet, daß sie in diesen Kühlluftrückführspalt einmünden.

Die Nuten oder Rinnen der Profilierung verlaufen bisher ausschließlich genau senkrecht. Um die Kühlluftführung zu verbessern, kann es jedoch im Rahmen der Erfindung vorteilhaft sein, die Nuten oder Rinnen der Profilierung - schräg, d.h. nicht genau vertikal verlaufend anzuordnen.

Wie bereits ausgeführt, wird durch die erhabene Anordnung der Schrammflächen der Abstand zwischen dem Ladegut und den Innenflächen der Seitenwände etwas vergrößert. Auf diese Weise kommt auch leicht verrutschte Ladung nicht oder lediglich "gedämpft" mit der Seitenwand in Berührung, so daß auch in einem solchen Falle ohne ungünstigen Einfluß auf die Luftzirkulation die Gefahr von Beschädigungen der Profilierung verringert wird.

Im folgenden ist zur weiteren Erläuterung und zum besseren Verständnis ein Ausführungsbeispiel der Erfindung unter Bezugnahme auf die beigefügten Figuren näher beschrieben und erläutert:

Fig.1 zeigt in einer perspektivischen Ansicht einen Blick in den Innenraum eines erfindungsgemäß ausgestalteten Kühlaufbaues von hinten in Richtung der Vorderwand, und

Fig.2 zeigt einen Schnitt in der Ebene A-B der Figur 1.

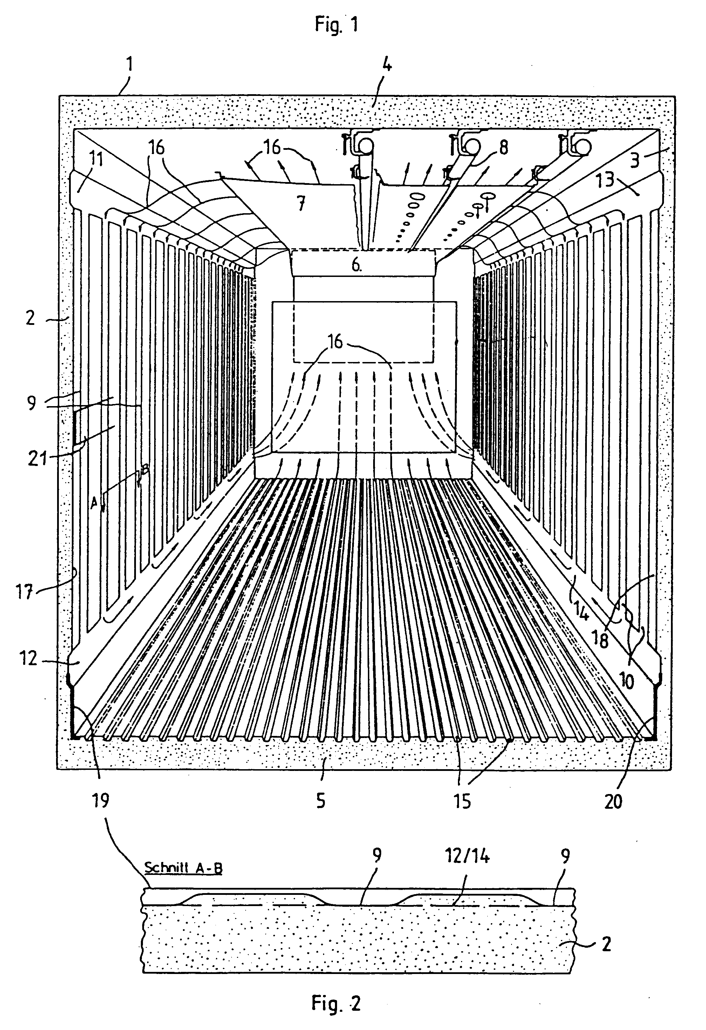

Wie sich aus der Fig. 1 ergibt, besteht der Kühlaufbau 1 aus isolierten Seitenwänden 2, 3, einem isolierten Dach 4 und einem ebenfalls isolierten Boden 5. Mit 6 ist das Endglied eines Kühlaggregates bezeichnet. An der Decke 4 ist auf der linken Seite ein einfacher Luftführungskanal 7, und auf der rechten Seite eine andere Variante eines Luftführungskanales im Zusammenhang mit einer Fleischaufhängevorrichtung 8 dargestellt.

Die Seitenwände 2, 3 sind mit einer Profilierung in Form von Rinnen oder Nuten 9, 10 ausgestattet, die in waagerecht verlaufende Luftführungskanäle 11,12,13 und 14 münden, und zwar derart, daß ein glatter Übergang gegeben ist. Der Boden 5 weist eine übliche Profilierung 15 auf.

In Fig. 1 erkennt man deutlich, daß die Luftführungskanäle 11 bis 14 wesentlich querschnittsgrößer sind als die vertikale Profilierung 9, 10; außerdem ist der glatte Übergang gut erkennbar. In diesem Zusammenhang ist auch auf Fig. 2 zu verweisen, in welcher die entsprechenden Bezugszahlen eingetragen sind. Mit Pfeilen 16 ist in Fig. 1 die eingangs erwähnte, verbesserte Kühlluftführung und Luftzirkulation veranschaulicht.

Ein wesentliches Merkmal der Erfindung stellen die gegenüber den Seitenflächen 17, 18 der Seitenwände 2, 3 erhabenen, von vorn bis nach hinten reichenden Flächen 19,20 dar, die als Schrammflächen oder Schrammborde bezeichnet werden können. Diese verhindern, daß beim Beladen die Profilierung 9, 10 und die Innenseiten 17,18 der Seitenwände 2, 3 beschädigt werden. Wie zeichnerisch angedeutet, sind die Flächen 19, 20, die auch als Gleitflächen anzusehen sind, gegenüber den anderen Wandungsteilen verstärkt ausgeführt, damit sie auch rauhen Belastungen gewachsen sind. Zu erkennen ist ferner, daß ihre Höhe größer ist als die Breite der Kanäle 12, 14, um zu vermeiden, daß etwas zu hoch eingefahrenes Ladegut Schaden verursacht.

Auf der linken Seite der Fig. 1 ist eine hochformatige Fläche 21 in Form einer Schiene angedeutet, die beidseitig angeordnet wird und als hochgezogene weitere Schrammfläche dienen kann. Außerdem können in die Schiene im Bereich der vertikalen Profilierung 9, 10 Haken von Zwischenbodenträgern eingehängt werden.

**Patentansprüche**

1. Kühlaufbau für Lastfahrzeuge mit einer im Boden und in den Seitenwänden einschl. der Türen zum Innenraum hin offenen, der Luftführung dienenden Profilierung, die im Bereich aller vertikaler Seitenwände aus Nuten oder Rinnen besteht, die in einen unteren, im wesentlichen waagerecht verlaufenden und rinnenartig ausgebildeten Luftführungs-Kanal einmünden und sich von dort aus in Richtung auf die obere Innenraum-Begrenzung erstrecken, dadurch **gekennzeichnet,**
   - daß der Luftführungskanal (12, 14) im Abstand nach oben von der Oberseite des Bodens (5) des Innenraums angeordnet ist,
   - daß die Breite des Luftführungskanals (12, 14) größer ist als diejenige der sich von ihm aus in Richtung auf die obere Innenraumbegrenzung erstreckenden Nuten oder Rinnen und
   - daß an jeder Seitenwand bevorzugt ein weiterer, im wesentlichen waagerechter Luftführungskanal (11, 13) vorgesehen ist, in den die Rinnen oder Nuten der Seitenwände einmünden.

2. Kühlaufbau nach Anspruch 1,
   dadurch gekennzeichnet, daß Jede Seitenwand (2,3) zwischen der Oberseite des Bodens (5) und dem unteren Rand des unteren Luftführungskanales Schrammflächen (19,20) aufweist, die sich über die gesamte Länge des Aufbaues erstrecken und gegenüber den Innenflächen (17,18) der Seitenwände (2,3) erhaben sind.

3. Kühlaufbau nach Anspruch 2
   dadurch gekennzeichnet, daß die Schrammflächen (19,20) eine in vertikaler Richtung durchgehende Fläche bilden, deren Ebene Parallel zur Ebene der Innenflächen (17,18) der Seitenwände (2,3) verläuft.

4. Kühlaufbau nach Anspruch 3 dadurch gekennzeichnet, daß die Ebene der Schrammflächen (19,20) gegenüber der Ebene der Innenflächen (17,18) der Seitenwände (2,3) einen Abstand aufweist, der etwa der halben Tiefe des jeweils angrenzenden unteren Luftführungskanales (12 bzw. 14) entspricht.

5. Kühlaufbau nach Anspruch 1, dadurch gekennzeichnet, daß die an den Seitenwänden einschl. der Türen vorgesehenen Nuten oder Rinnen (9, 10) absatzlos in die Luftführungskanäle (11 bis 14) übergehen.

6. Kühlaufbau nach einem der Ansprüche 2, 3 oder 4, dadurch gekennzeichnet, daß die Schrammflächen (19,20) verstärkt sind.

7. Kühlaufbau nach Anspruch 6 dadurch gekennzeicnet, daß die Schrammflächen (19,20) aus nichtrostendem Stahl bestehen.

8. Kühlaufbau nach Anspruch 6 oder 7 dadurch gekennzeichnet, daß die Schrammflächen (19,20) aus Polyester bestehen, und daß unter der Deckschicht des Polyesters eine druckfeste Materiallage angeordnet ist.

9. Kühlaufbau nach einem oder mehreren der vorhergehenden Ansprüche, dadurch gekennzeichnet, daß im Bereich der Innenflächen (17,18) horizontal verlaufende Schienen angeordnet sind, deren dem Innenraum zugewandte Flächen (21) zusätzliche Schrammflächen bilden und die als Widerlager für an sich bekannte einhängbare Zwischenbodenträger ausgebildet sind.

10. Kühlaufbau nach Anspruch 1, dadurch gekennzeichnet, daß zur Bildung eines Kühlluftrückführungsspaltes im Abstand von der Innenfläche der Vorderwand eine Wandung angeordnet ist, und daß die unteren Luftführungskanäle (12,14) in den Kühlluftrückführungsspalt einmünden.

11. Kühlaufbau nach Anspruch 1, dadurch gekennzeichnet, daß die Nuten oder Rinnen (9, 10), die sich von den unteren Luftführungskanälen (12, 14) aus in Richtung auf die obere Innenraumbegrenzung erstrecken, vertikal verlaufen.

12. Kühlaufbau nach Anspruch 1, dadurch gekennzeichnet, daß die Nuten oder Rinnen (9, 10), die sich von den unteren Luftführungskanälen (12, 14) aus in Richtung auf die obere Innenraumbegrenzung erstrecken, schräg verlaufen.

13. Kühlaufbau nach Anspruch 1, dadurch gekennzeichnet, daß die rinnenartigen Luftführungskanäle (11, 12, 13, 14) einen trapezförmigen Querschnitt aufweisen.

**Claims**

1. A refrigerated body for heavy goods vehicles comprising profiling in the base and in the side walls, including the doors, which is open towards the inner chamber and serves for the supply of air and which, in the region of all the vertical side walls, is formed by grooves or troughs which lead into a lower, substantially horizontally extending and trough-like air supply channel and from here extend towards the upper boundary of the inner chamber, characterised in that
   - the air supply channel (12, 14) is arranged at a distance above the upper side of the base (5) of the inner chamber,
   - the width of the air supply channel (12, 14) is greater than that of the grooves or troughs which extend from said air supply channel towards the upper boundary of the inner chamber and
   - a further air supply channel (11, 13), into which the troughs or grooves of the side walls lead, is preferably provided in each side wall.

2. A refrigerated vehicle body as claimed in Claim 1, characterised in that between the upper side of the base (5) and the lower edge of the lower air supply channel, each side wall (2, 3) comprises guard surfaces (19, 20) which extend along the entire length of the body and are raised in relation to the inner surfaces (17, 18) of the side walls (2, 3).

3. A refrigerated vehicle body as claimed in Claim 2, characterised in that the guard surfaces (19, 20) form a continuous, vertically extending surface, the plane of which is parallel to the plane of the inner surfaces (17, 18) of the side walls (2, 3).

4. A refrigerated vehicle body as claimed in Claim 3, characterised in that the plane of the guard surfaces (19, 20) is spaced from the plane of the inner surfaces (17, 18) of the side walls (2, 3) by a distance which corresponds approximately to half the depth of the respective adjacent, lower air supply channel (12, 14).

5. A refrigerated vehicle body as claimed in Claim 1, characterised in that the grooves or troughs (9, 10) which are disposed in the side walls, including the doors, continue uninterruptedly into the air supply channels (11 to 14).

6. A refrigerated vehicle body as claimed in one of Claims 2, 3, or 4, characterised in that the guard surfaces (19, 20) are reinforced.

7. A refrigerated vehicle body as claimed in Claim 6, characterised in that the guard surfaces (19, 20) are made of stainless steel.

8. A refrigerated vehicle body as claimed in Claim 6 or 7, characterised in that the guard surfaces (19, 20) are made of polyester and that a compression-resistant material layer is arranged beneath the outer layer of the polyester.

9. A refrigerated vehicle body as claimed in one or more of the preceding claims, characterised in that horizontally extending rails are arranged in the region of the inner surfaces (17, 18), where those surfaces (21) of the rails which face towards the inner chamber form additional guard surfaces and where said rails form an abutment for suspendable false floor supports known per se.

10. A refrigerated vehicle body as claimed in Claim 1, characterised in that, for the formation of a cooling air recycling gap, a wall is arranged at a distance from the inner surface of the front wall, and that the lower air supply channels (12, 14) lead into the cooling air recycling gap.

11. A refrigerated vehicle body as claimed in Claim 1, characterised in that the grooves or troughs (9, 10) which extend from the lower air supply channels (12, 14) towards the upper boundary of the inner chamber are vertically directed.

12. A refrigerated vehicle body as claimed in Claim 1, characterised in that the grooves or troughs (9, 10) which extend from the lower air supply channels (12, 14) towards the upper boundary of the inner chamber are obliquely directed.

13. A refrigerated vehicle body as claimed in Claim 1, characterised in that the trough-like air supply channels (11, 12, 13, 14) possess a trapezoidal cross-section.

**Revendications**

1. Caisse frigorifique pour camions comportant dans le plancher et les parois latérales y compris les portes un profilage ouvert vers l'espace intérieur qui sert au guidage de l'air, qui consiste dans le domaine de toutes les parois latérales verticales en des rainures ou des rigoles qui débouchent dans un canal de guidage d'air inférieur qui s'étend sensiblement horizontalement et qui est sous forme de rigole et qui s'étendent de là en direction de la limite supérieure de l'espace intérieur, caractérisée
   - en ce que le canal de guidage d'air (12, 14) est disposé en hauteur, à distance du côté supérieur du plancher (5) de l'espace intérieur,
   - en ce que la largeur du canal de guidage d'air (12, 14) est supérieure à celle des rainures ou rigoles qui s'étendent depuis celui-ci en direction de la limite supérieure de l'espace intérieur et
   - en ce que, sur chaque paroi latérale, il est prévu de préférence un autre canal de guidage d'air (11, 13) sensiblement horizontal dans lequel débouchent les rigoles ou rainures des parois latérales.

2. Caisse frigorifique selon la revendication 1, caractérisée en ce que chaque paroi latérale (2, 3) présente entre le côté supérieur du plancher (5) et le bord inférieur du canal de guidage d'air inférieur des surfaces d'éraflure (19, 20) qui s'étendent sur toute la longueur de la caisse et qui sont en relief par rapport aux surfaces internes (17, 18) des parois latérales (2, 3).

3. Caisse frigorifique selon la revendication 2, caractérisée en ce que les surfaces d'éraflure (19, 20) forment une surface continue en direction verticale dont le plan est parallèle au plan des surfaces internes (17, 18) des parois latérales (2, 3).

4. Caisse frigorifique selon la revendication 3, caractérisée en ce que le plan des surfaces d'éraflure (19, 20) est situé par rapport au plan des surfaces internes (17, 28) des parois latérales (2, 3) à une distance qui correspond sensiblement à la moitié de la profondeur du canal de guidage d'air inférieur (12 ou 14) contigu correspondant.

5. Caisse frigorifique selon la revendication 1, caractérisée en ce que la transition entre les rainures ou rigoles (9, 10) prévues sur les parois latérales, y compris les portes, et les canaux de guidage d'air (11 à 14) est dépourvue de décrochement.

6. Caisse frigorifique selon l'une des revendications 2, 3 ou 4, caractérisée en ce que les surfaces d'éraflure (19, 20) sont renforcées.

7. Caisse frigorifique selon la revendication 6, caractérisée en ce que les surfaces d'éraflure (19, 20) consistent en acier inoxydable.

8. Caisse frigorifique selon la revendication 6 ou 7, caractérisée en ce que les surfaces d'éraflure (19, 20) consistent en polyester et en ce qu'une couche de matière résistante à la pression est disposée sous la couche de revêtement du polyester.

9. Caisse frigorifique selon une ou plusieurs des revendications précédentes, caractérisée en ce que, dans le domaine des surfaces internes (17, 18) sont disposés des rails horizontaux dont les surfaces (21) tournées vers l'espace intérieur forment des surfaces d'éraflure supplémentaires et qui sont sous forme de contre-appuis pour des supports de plancher intermédiaire accrochables connus en soi.

10. Caisse frigorifique selon la revendication 1, caractérisée en ce qu'une paroi est disposée à distance de la surface interne de la paroi antérieure pour former un interstice de recyclage d'air de refroidissement et en ce que les canaux de guidage d'air inférieurs (12, 14) débouchent dans l'interstice de recyclage d'air de refroidissement.

11. Caisse frigorifique selon la revendication 1, caractérisée en ce que les rainures ou rigoles (9, 10) qui s'étendent des canaux de guidage d'air inférieurs (12, 14) en direction de la limite supérieure de l'espace interieur sont verticales.

12. Caisse frigorifique selon la revendication 1, caractérisée en ce que les rainures ou rigoles (9, 10) qui s'étendent des canaux de guidage d'air inférieurs (12, 14) en direction de la limite supérieure de l'espace intérieur sont obliques.

13. Caisse frigorifique selon la revendication 1, caractérisée en ce que les canaux de guidage d'air en forme de rigoles (11, 12, 13, 14) ont une section droite en forme de trapèze.

Fig. 1

Schnitt A-B

Fig. 2